# EUROPEAN PATENT APPLICATION

(11) **EP 2 063 423 A1**
(43) Date of publication of application: **27.05.2009**
(21) Application number: 07120784.9
(22) Date of filing: 15.11.2007
(51) Int. Cl.: G11B 7/0065

(54) **Shift-insensitive storage of information in page oriented optical data storage systems**

(71) Applicant: Deutsche Thomson OHG, 30625 Hannover (DE)
(72) Inventor: Eyberg, Rudolf, 78052 Villingen-Schwenningen (DE); Przygodda, Frank, 78050 Villingen-Schwenningen (DE); Malki, Oliver, 78176 Blumberg (DE)
(74) Representative: Schmidt-Uhlig, Thomas

(57) **Abstract**

The present invention relates to a data page (3) for optical data storage for an optical storage system, i.e. a holographic storage system, with an increased insensitivity against movement, to a holographic storage medium comprising (19) such data pages (3), to an apparatus (10) for reading from and/or writing to an optical medium (19) comprising such data pages (3), and to a method for reading and/or writing such data pages (3).

A data page (3) for optical data storage is presented. The data page includes one or more areas which are insensitive against movement (5).

## Description

The present invention relates to a data page for optical data storage in an optical storage system, e.g. a holographic storage system, with an increased insensitivity against movement, to an optical storage medium, e.g. a holographic storage medium comprising such data pages, to an apparatus for reading from and/or writing to an optical storage medium comprising such data pages, and to a method for reading and/or writing such data pages.

The invention is described below using a holographic storage system as an example. It is apparent to a person skilled in the art that the invention is applicable within other optical storage systems.

In holographic data storage digital data are stored by encoding the interference pattern produced by the superposition of two coherent laser beams, where one beam, the so-called 'object-beam', is modulated by a spatial light modulator (SLM) and carries the information to be recorded. The second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recoding. This results in the reconstruction of the recorded object beam.

One advantage of holographic data storage is an increased data capacity. Contrary to conventional optical storage media, the volume of the holographic storage medium is used for storing information, not just a single or few two-dimensional layers. One further advantage of holographic data storage is the possibility to store multiple data in the same volume, e.g. by changing the angle between the two beams or by using shift multiplexing, etc. Furthermore, instead of storing single bits, data are stored as data pages. Typically a data page consists of a matrix of light-dark-patterns, i.e. a two dimensional binary array or an array of grey values, which code multiple bits. Data pages consisting of patterns showing different phases can also be used. This allows to achieve increased data rates in addition to the increased storage density. The data page is imprinted onto the object beam by the SLM and detected with an array detector.

Increasing the data capacity and the data rate are two of the main tasks when developing holographic data storage systems. Increasing the data capacity is closely related to decreasing the access time to a certain data page or volume of the optical storage medium.

The holographic medium is read-out out while being illuminated by the reference beam as described above. The position of the medium with respect to the optics during reading of a hologram has to be exactly the same as during the writing of the hologram. A displacement of the medium from the ideal read-out position decreases the intensity of the read-out pattern on the detector array. Further, the image sharpness is reduced and hence the image is blurred. In addition, the retrieved data page image is misaligned relative to the detector.

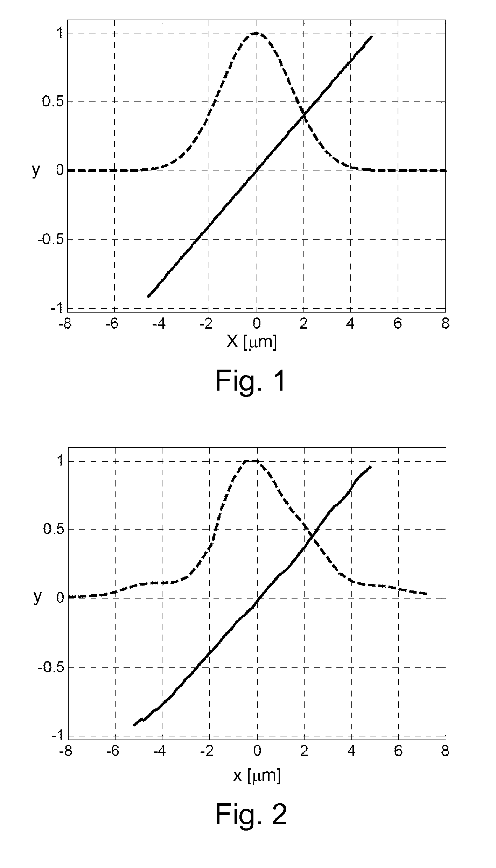

The principle behaviour of image intensity and relative image displacement on the detector as a function of the hologram displacement is shown in Fig. 1. The solid line shows the relative image displacement of the read out hologram on the detector (y-axis) as a function of the position of the medium (x-axis). The dotted line shows the relative image intensity of the read out hologram on the detector (y-axis) as a function of the position of the medium (x-axis). A hologram at position x=0 is optimally aligned. In this case, the read out picture on the detector has a minimal shift and a maximal light intensity.

Regarding these effects, a not so precise positioning of the hologram will degrade the data page image on the detector. Especially in systems with continuously rotating disks the exposure time of the hologram has to be short enough to freeze the movement. Pulsed lasers, fast shutters and fast detectors are required. Long exposures or fast movement of the medium lead to a blurred image.

It is an object of the invention to propose a data page which is less sensitive concerning movement.

According to the invention, on a data page there are one or more areas including data which is less sensitive to movement or inaccurate positioning during read-out. This allows read-out of the information stored in these areas of the data page during fast movement of the storage medium, for example a holographic storage medium. This is achieved for example by the use of special modulation or coding of data in these areas. Misalignment or movement in general leads to lower signal-to-noise ratios (SNR), which can partly be compensated by the modulation or coding of the data in these areas.

According to a further improvement of the invention, data pixels are enlarged in movement direction in a shift insensitive area. In this way they are much better detected even if blurring in this direction happens due to the movement of the medium parallel to the detector surface. On a rotating media like for example a disk, at each point a movement vector perpendicular to the radius and perpendicular to the optical axis of the detector defines the direction of movement. Crosstalk from one pixel to another during fast moving is reduced. This corresponds to a data modulation with reduced spatial frequencies, which makes accurate alignment to a certain extent less important.

In an advantageous manner, 'on'-pixels in the shift insensitive area have the same size in movement direction. In other words, each 'on'-pixel has the same length. Therefore, each 'on'-pixel has the same spatial frequency in moving direction. Pixel estimation in case of blurred images is facilitated because the pixel length and the spatial frequency of the pixels are known.

In an advantageous manner, the modulation scheme does not allow two 'on'-pixels, e.g. two illuminated pixels, side by side. This improves detectability of each pixel by reducing crosstalk from one pixel to another. Edges of a detected signal can be used to improve alignment.

To improve tracking and alignment perpendicular to the moving direction, the shift insensitive area preferably includes a line in moving direction only containing 'on'-pixels or only containing 'off'-pixels. Alignment perpendicular to the moving direction can be ensured while the medium is arbitrarily shifted in moving direction, and can be performed independent of the moving speed.

In an advantageous manner, the shift insensitive area contains at least one of address information, content information, tracking control information or focusing control information. This information is usually necessary to locate a certain data page, to obtain an overview of the whole content of the stored data or to prepare read-out of the data. Usually, this information has a lower data volume and has to be obtained fast because it is needed before read-out of the whole data can be started. After reading this data, the well known standard read-out process is used to obtain the data of interest from an area with a known data page format. This leads to fast access to a specific data page, fast search routines and fast setup of the reading process.

A data page containing only shift insensitive areas is preferably stored between two data pages. This improves the read-out process during continuously moving the storage medium.

In another advantageous manner, a data page contains multiple shift insensitive areas with different degrees of shift insensitivity. Various read-out speeds and various misalignment tolerances are supported by such a medium dependent on the requirements of the application for which the stored data are used. Different coding schemes are supported in these areas.

Favourably, the described data pages are used for holographic data storage systems. Multiple data pages are stored within a holographic storage medium. Alignment requirements to reduce crosstalk and to enhance SNR are high in these systems. Using shift insensitive areas, which reduce alignment requirements, provide a big advantage.

It is a further object of the invention to propose an apparatus for reading from an optical storage medium containing data pages according to the invention. The apparatus has means for detecting and decoding shift insensitive areas.

In an advantageous embodiment of the invention an apparatus for reading a data page according to the invention from an optical storage medium provides an additional optical path optimized for reading the shift insensitive areas. This further enhances the read-out speed and lowers the error rate. The apparatus includes a CCD for reading data of the data area and a CCD for reading data of the shift insensitive area. The CCD for detecting the shift insensitive data is for example a two dimensional CCD. It is also within the scope of the invention, to provide for example a lens system and a one dimensional CCD for reading the shift insensitive area. The read out signal is a time dependant one dimensional signal. It is also within the scope of the invention to use a common CCD and to adapt signal processing to the specific characteristic of the read out data of the shift insensitive area, for example, to use specific error correction or to adapt oversampling.

It is a further object of the invention to propose an apparatus for writing to an optical storage medium containing data pages according to the invention. The apparatus has means for coding the data for the shift insensitive area. It is also within the scope of the invention to provide distinctive SLMs for writing the shift insensitive area and for writing the data area of a data page.

It is a further object of the invention to propose a method for reading and/or writing a data page according to the invention. The method contains steps for detecting the optical storage media, identifying the shift insensitive areas within the data pages, detecting the pixels within the shift insensitive areas and decoding the derived data from these areas or coding data to be written to shift insensitive areas.

For better understanding the invention shall now be explained in more detail in the following description with reference to the figures. It is understood that the invention is not limited to this exemplary embodiment and that specified features can also expediently be combined and/or modified without departing from the scope of the present invention.
- Fig. 1: shows the normalized value of the relative image intensity and the relative displacement of the image on the detector dependent of the data page displacement retrieved by a model,
- Fig. 2: shows the normalized value of the relative image intensity and the relative displacement of the image on the detector dependent of the data page displacement retrieved by measurements,
- Fig. 3: shows an example of a data page according to the Prior Art,

- Fig. 4: shows the detected image of the data page shown in Fig. 3, retrieved during the read-out process in case of a fast moving medium,
- Fig. 5: schematically depicts a data page containing a data area and a shift insensitive area,
- Fig. 6: shows a data page containing a data area and a shift insensitive area according to a first embodiment,
- Fig. 7: shows the detected image of the data page shown in Fig. 6, retrieved during the read-out process in case of a stationary medium,
- Fig. 8: shows the detected image of the data page shown in Fig. 6, retrieved during the read-out process in case of a fast moving medium,
- Fig. 9: shows pixels in the shift insensitive area as the result of a pixel image which is extended in the direction of image movement,
- Fig. 10: shows pixels in the shift insensitive area which are arranged like a bar-code,
- Fig. 11: show pixels that are arranged with low frequency modulation,
- Fig. 12: shows a pixel area which is arranged without white neighbour elements perpendicular to the moving direction,
- Fig. 13: shows a pixel area in which one pixel row is constantly white without white neighbour elements perpendicular to the moving direction,
- Fig. 14: shows a pixel area using large extended pixel blocks,
- Fig. 15: shows a pixel area divided in parts of different degrees of shift insensitivity,
- Fig. 16: shows a data page in which the shift insensitive information is not located in a specific area but spread over the data page,
- Fig. 17: shows a data page containing shift insensitive information only which is written between two other data pages,
- Fig. 18: shows a schematically example for an additional optical path including a lens system and detector array being optimized to fast detection of the shift insensitive pixel areas and a lens system and detector array being optimized to the common data page,
- Fig. 19: schematically shows an apparatus for reading and/or writing to a holographic storage medium including a lens system and detector array being optimized to fast detection of the shift insensitive pixel areas and a lens system and detector array being optimized to the common data page.

Fig. 1 shows the effects of a displacement of the position of the medium relative to the optics during the read-out process compared to the writing process. Image intensity of the read-out data page on the detector is shown as function of the displacement on the basis of a model. Further, relative image displacement of the read-out image on the detector is shown as a function of the displacement of the medium.

Fig. 2 shows the same image intensity and image displacement on the basis of measurements. An inaccurate positioning of the data page compared to the optical path will significantly degrade the received image on the detector and hence lower the SNR. In systems with continuously rotating disks alignment is especially a challenge.

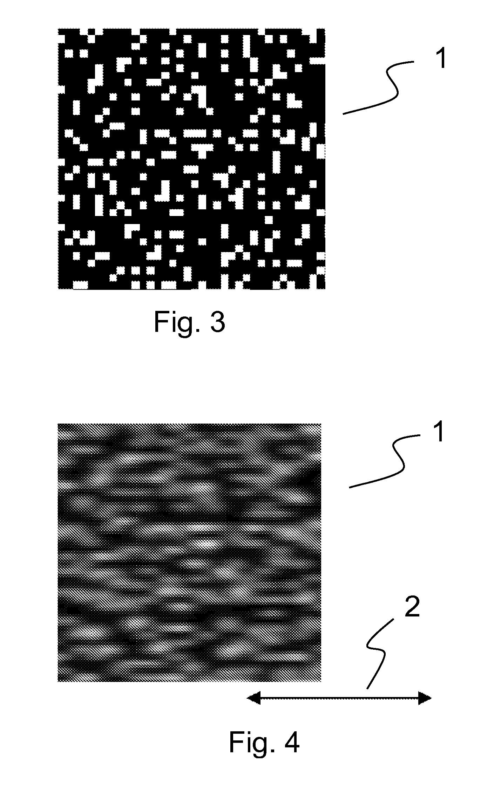

Fig. 3 shows a data page 1 known in the art which is read-out by a holographic system. Light and dark pixels of equal size are distributed over the whole data page 1.

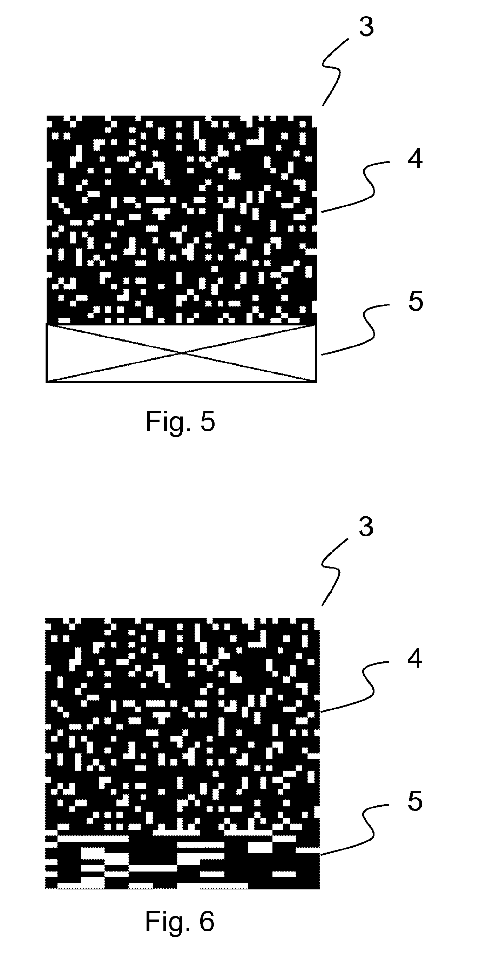

Fig. 4 shows the read-out results of the data page 1 depicted in Fig. 3 if the data page is moved in a movement direction 2 parallel to the detector array during the read-out process. The image is blurred strongly and has a small SNR. In many cases the data can not be retrieved using this detector image. In the following Figs. 5 - 18 the movement direction 2 is omitted for simplicity.

Fig. 5 schematically shows a data page 3 according to the invention. It is divided in a data area 4 and at least one shift insensitive area 5. The shift insensitive area 5 is depicted at the bottom of the data page 3 but it is understood by someone skilled in the art, that the shift insensitive area can be located anywhere else in the data page 3. Locating the shift insensitive area 5, for example, at the top or at the bottom of the data page 3 has the advantage that the sensor for reading the shift insensitive area 24 and the sensor for reading the shift sensitive area 22 can be located side by side. Locating the shift insensitive area 5 in the middle of the data page 3 has the advantage that blurring effects are usually minimized in the middle of a data page 3, because calibration is done mainly in this area. Locating the shift insensitive area 5 at the left side or right side of the data page 3 has the advantage that the shift insensitive pixels are distributed equally in the direction perpendicular to the moving direction. This assures that at least parts of the shift insensitive area 5 are in a well calibrated region in any case. The shift insensitive area 5 according to the invention can be realized in many ways. Some advantageous embodiments will be described in more detail below.

Fig. 6 shows a data page 3 according to Fig. 5, using an exemplary embodiment of the invention for the shift insensitive area 5. The pixels are enlarged in a direction that corresponds to the moving direction 2 of the data page 3.

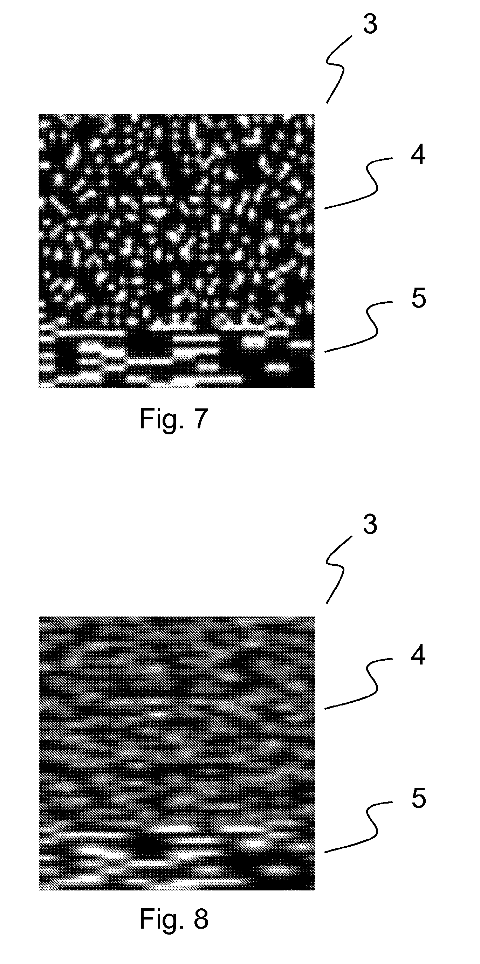

Fig. 7 shows the detected image of the data page 3 depicted in Fig. 6 if the medium is not moved. Both, the data area 4 and the shift insensitive area 5 are retrieved with high image quality.

Unlike, Fig. 8 shows the detected image of the data page 3 depicted in Fig. 6 if the medium is moved in moving direction. The described effects of misalignment lead to a blurred image. In case of the data area 4, the image has a poor SNR and cannot be retrieved. In case of the shift insensitive area 5, the detected image can be retrieved much better than the data area 4.

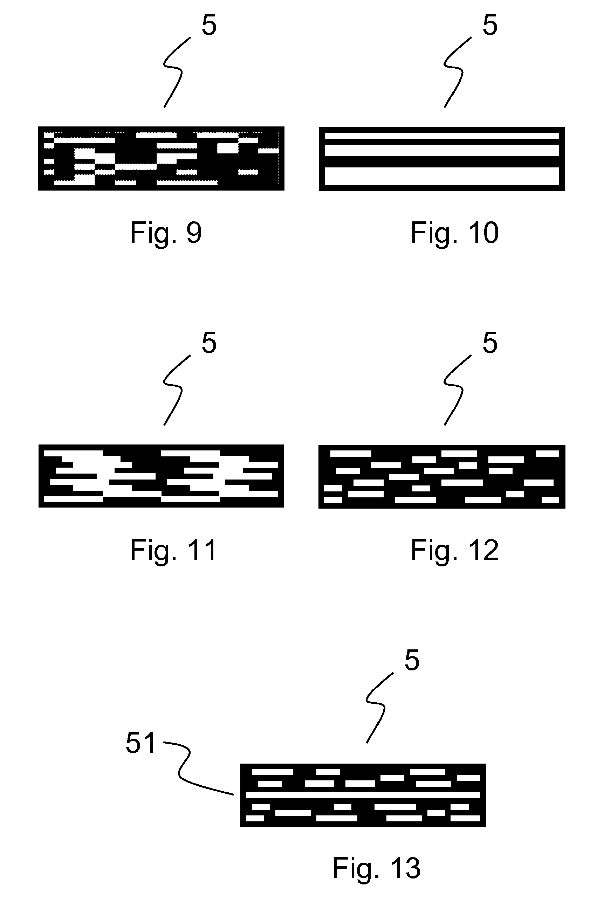

Fig. 9 shows a possible implementation of the shift insensitive area 5. The data pixels are extended in the direction of movement and hence the requirements to alignment conditions in moving direction decrease and faster moving of the medium is allowed.

Fig. 10 shows another embodiment of the invention. Here, the pixels of the shift insensitive area 5 are arranged like a barcode. This allows reading of the content of the shift insensitive area 5 independent from the position of the data page 3 in moving direction and independent from the speed in moving direction.

Fig. 11 shows a shift insensitive area 5 where all data pixels have the same spatial frequency in moving direction and, therefore, have the same size in moving direction. Detection of the shift insensitive area 5 at a low spatial frequency is enabled.

Fig. 12 shows a modulation in which no 'on'-pixels are located side by side in a direction perpendicular to the moving direction in the shift insensitive area 5. This further reduces crosstalk from one pixel row in moving direction to another.

Fig. 13 shows a shift insensitive area 5 which uses a horizontal line 51 which is constantly in 'on'-state. Independent from the moving speed, this line 51 will always lead to the same result on the detector. A line like this may be used for example for focusing and tracking. In case of disruption of the read out line, loss of track can be assured without evaluating the data signal. Focusing is eased due to a well known constant focusing signal.

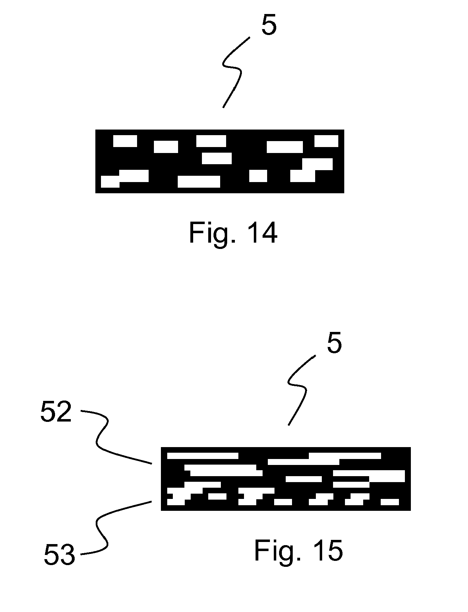

Fig. 14 uses large extended blocks in moving direction and in the direction perpendicular to the moving direction 5. Lower resolution of the detector array and/or the optical path is allowed for reading this area compared to a common data area 4.

Fig. 15 shows two different shift insensitive areas 52, 53 with different degrees of shift insensitivity, which can be read-out with different velocities of the medium. This further enhances the degrees of freedom in developing a system. The content of the stored information in the shift insensitive areas 52, 53 is classified in different categories according to their requirements on reading speed and hence medium velocity during read-out.

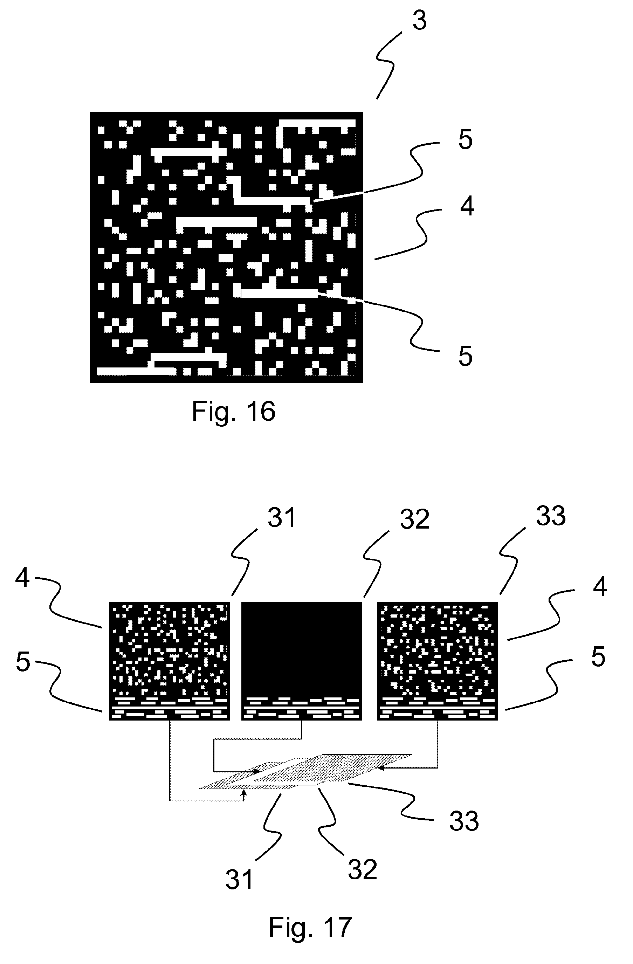

Fig. 16 shows an example of a shift insensitive area 5 that is spread in movement direction and perpendicular to the movement direction over the whole data page 3. It is not concentrated in one specific area. Local performance differences of the optical path or local blurs of the detector image are overcome.

Fig. 17 schematically shows a data page 32 containing only shift insensitive information which is located between two data pages 31, 33 including a shift insensitive area 5 and a common data area 4. The two data pages 31, 33 may also contain only a common data area 4.

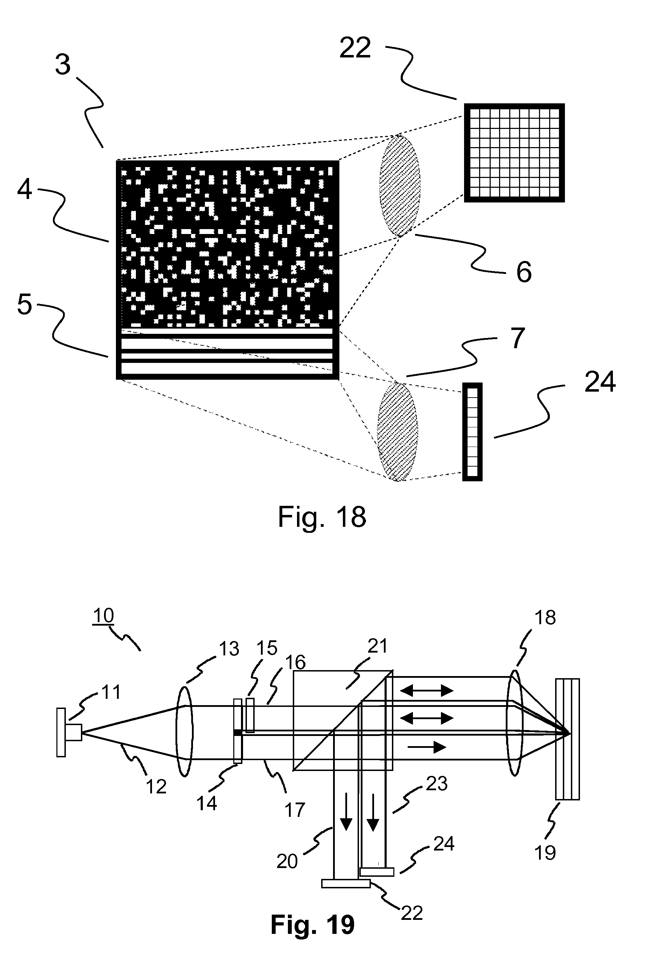

Fig. 18 schematically shows a first optical path 6, 22 for reading out the data area 4. A second optical path 7, 24 optimized for reading out the shift insensitive area 5 is also provided. A CCD 24 for reading data of the shift insensitive area 5 is a two-dimensional CCD or a one dimensional CCD providing a time dependant one dimensional signal. The lens system 7 is adapted to the used CCD 24.

In Fig. 19 an apparatus 10 for reading and/or recording a holographic storage medium 19 is shown schematically. A source of coherent light, e.g. a laser diode 11, emits a light beam 12, which is collimated by a collimating lens 13. The light beam 12 is then divided into two separate light beams 16, 17. In the example the division of the light beam 12 is achieved using a first beam splitter 14. However, it is likewise possible to use other optical components for this purpose. A spatial light modulator (SLM) 15 modulates one of the two beams, the so called "object beam" 16, to imprint a two-dimensional data pattern. Both the object beam 16 and the further beam, the so called "reference beam" 17, are focused into a holographic storage medium 19, e.g. a holographic disk or card, by an objective lens 18. At the intersection of the object beam 16 and the reference beam 17 an interference pattern appears, which is recorded in a photo-sensitive layer of the holographic storage medium 19. An apparatus for writing a data page 3 including one or more shift insensitive areas 5 has for example an encoder for encoding the data page 3 to be written using a single SLM 15.

The stored data are retrieved from the holographic storage medium 19 by illuminating a recorded hologram with the reference beam 17 only. The reference beam 17 is diffracted by the hologram structure and produces a copy of the original object beam 16. Schematically depicted object beam 20 represents the reconstructed beam part containing information from the data area 4. Depicted object beam 23 represents the reconstructed beam part containing information from the shift insensitive area 5. These reconstructed object beams 20, 23 are collimated by the objective lens 12 and directed onto two array detectors 22, 24, e.g. CCD-arrays, by a second beam splitter 21. The array detectors 22, 24 allow to reconstruct the recorded data. Detector 22 is optimized to reconstruct data stored in the data area 4, detector 24 is optimized to reconstruct data stored the shift insensitive area 5. It is understood by someone skilled in the art that an apparatus for reading and/or recording data pages 3 according to the invention can be realized in many ways. For example a further beam splitter and a further SLM can be used to completely separate the optical paths of shift insensitive data and commonly known data.

## Claims

1. Data page (3) for optical data storage, **characterized in that** the data page (3) includes one or more areas (5) which are insensitive against movement.

2. Data page (3) according to claim 1, **characterized in that** data pixels **in that** one or more areas (5) are enlarged in moving direction (2).

3. Data page (3) according to one of the preceding claims, **characterized in that** 'on'-pixels **in that** one or more areas (5) have the same size in movement direction (2).

4. Data page (3) according to one of the preceding claims, **characterized in that** one or more shift insensitive areas (5) do not show two or more 'on'-pixels which are located side by side.

5. Data page (3) according to one of the preceding claims, **characterized in that** one or more shift insensitive areas (5) include an 'on'-line and/or 'off'-line in moving direction (2).

6. Data page (3) according to one of the preceding claims, **characterized in that** one or more shift insensitive areas (5) contains at least one of address information, content information, tracking control information or focusing control information.

7. Data page (32) according to one of the preceding claims, **characterized in that** it only contains shift insensitive information (5).

8. Data page (3) according to one of the preceding claims, **characterized in that** the data page (3) contains areas with different degrees of shift insensitivity (52, 53).

9. Data page (3) according to one of the preceding claims, **characterized in that** the data page (3) is a holographic data page.

10. Optical data storage medium (19), **characterized in that** the medium comprises one or multiple data pages (3) according to one of the preceding claims.

11. Optical data storage medium (19) according to claim 10, **characterized in that** the medium comprises a data page (32) which only contains shift insensitive information (5) and which is arranged between two data pages (31, 33) having also common data areas (4).

12. Apparatus (10) for reading from an optical storage medium (19), **characterized in that** it is adapted to detect and decode shift insensitive areas (5) on a data page (3) that includes one or more areas (5) which are insensitive against movement.

13. Apparatus (10) according to claim 11, **characterized in that** an additional optical path (7, 23, 24) is provided for reading the shift insensitive areas (5).

14. Apparatus (10) for writing to an optical storage medium (19), **characterized in that** it has means to write a data page (3) according to one of the claims 1 to 9.

15. Method for reading or writing a data page according to claims 1 to 9, **having** the steps of:
- detecting data from a shift insensitive area
- decoding the detected data.
